# EUROPEAN PATENT SPECIFICATION

(11) **EP 0 761 068 B1**
(45) Date of publication and mention of the grant of the patent: **15.07.1998**
(21) Application number: 95919585.0
(22) Date of filing: 26.05.1995
(51) Int. Cl.: H04Q 7/38

(54) **TELECOMMUNICATIONS SYSTEM**
TELEKOMMUNIKATIONSSYSTEM
SYSTEME DE TELECOMMUNICATIONS

(30) Priority: 27.05.1994 EP 94303839
(43) Date of publication of application: 12.03.1997
(73) Proprietor: BRITISH TELECOMMUNICATIONS public limited company, London EC1A 7AJ (GB)
(72) Inventor: CHOTAI, Sunil, Suffolk IP5 7SJ (GB)
(74) Representative: Lidbetter, Timothy Guy Edwin
(86) International application number: GB9501219
(87) International publication number: WO9533353

(56) References cited:
- WO-A-93/18606
- DE-A- 3 212 023
- IEEE PERSONAL COMMUNICATIONS, vol. 1, no. 1, 1994 NEW YORK, NY, US, pages 42-50, XP 000460720 MOHAN ET AL. 'Two User Location Strategies for Personal Communications Services'

## Description

This invention relates to a telecommunications system, and in particular to the handling of the transfer of control of a mobile terminal between different switching centres of a cellular radio system.

A typical cellular radio network comprises a plurality of mobile radio units which can each be put into radio communication with any one of a plurality of fixed radio base stations, according to which, base station can provide the best radio link. The establishment of radio links between base stations and mobile units is under the control of a mobile switching centre (MSC) which routes calls to and from units by way of the base stations. Should a mobile radio unit move relative to the radio base stations during a call, such that radio contact between the mobile unit and a first radio base station could be lost, the mobile switching centre establishes a new radio link between a second base station and the mobile unit and allows the first link to be dropped without interruption of the call. This process is known as handover.

In order to facilitate the establishment of radio links with the mobile units, cellular radio systems typically store data relating to the mobile units authorised to operate on the network. Two types of data store are used, known as the Home Location Register (HLR) and the Visitor Location Register (VLR). Each mobile switching centre (MSC) has a VLR which stores details of the mobile units currently under the control of that MSC, including any inactive units which were last under its control. The details include information concerning the current base station to which the mobile unit is operating, which allows the mobile unit to be located readily in order to establish an incoming call, and also allow speedy verification of the identity of a mobile unit should it attempt an outgoing call.

The HLR stores permanent details relating to the mobile unit, such as access rights and any number translation necessary to interpret incoming call requests. It also identifies the VLR on which the mobile unit is currently logged.

If the location of a mobile unit, on making contact with the network, is identified as not corresponding to that currently stored in the VLR, the information in the VLR is updated. Many networks have more than one MSC. Should the mobile unit's new location be under the control of an MSC other than that to which it was previously working, the mobile unit's details will not be found on its VLR. The VLR of the new MSC retrieves from the HLR the data it needs to identify the mobile unit. The HLR can then update its record of which VLR the mobile unit is working to, and causes the cancellation of the record in the old VLR. This location update may take place during the establishment of a call or in a periodic updating transaction. Examples of such systems are described in International Patent Application W093/18606 (Bell Atlantic) and *IEEE Personal Communications 1/1994,* (Mohan and Jain) pages 42 to 50: *"Two User Location Strategies for Personal Communications Services". A* slightly different system, in which some location-related data is passed between VLRs, is disclosed in German patent specification DE 3212023 (Siemens).

It is desirable for a user to be able to use the same mobile unit wherever he or she may be. However, no cellular radio network currently has worldwide coverage. They normally have coverage over a limited geographical area, typically corresponding to an individual nation. In order to allow a user to use the same mobile unit in territories covered by different operators' networks, 'roaming' arrangements are being established between a number of cellular radio operators. The roaming arrangements allow a user to connect to whichever network gives coverage locally, and allow the user to be recognised for authentication, call routing, and billing purpose as being a subscriber to his or her 'home' network. Roaming arrangements may also be used to allow a user to select between operators covering the same territory, for example to take advantage of the most favourable tariff.

The principle of roaming requires that each network's HLR can communicate with the VLRs of the other networks participating in the roaming arrangement, so that a mobile unit can be correctly identified when it makes contact with any of the networks, and can be located for the purpose of routing incoming calls when it is not in its 'home' network.

The cellular radio system standard known as GSM (Global System for Mobile Communications) is designed to support roaming and also a number of extra telecommunications services. One such service is a voice message service (VMS) which allows the maker of a failed call attempt to leave a message for called party for subsequent retrieval. The message is stored in a voice message centre (VMC) associated with the called party's HLR. In order that the user of the mobile unit is alerted to the presence of a message in the VMC, the user's record in the HLR is flagged so that when the user next makes contact with the network the signal is transmitted to mobile unit to alert the user to the presence of a message.

Another facility is a Call Completion to Busy Subscriber (CCBS) service for notifying a user, having failed to get a reply, when a called party next makes a call, or when the called party completes a call which was in progress when the initial call attempt was made, so that the calling party can be notified that another call attempt is now likely to succeed.

Another such service is the capability for transmission of data messages to a mobile unit, a facility known as the short message service (SMS). The data messages may be used to control the mobile unit, e.g. to cause it to display a text message on a built-in display unit.

Different network operators in a roaming agreement can offer different enhanced services, even though for basic call establishment they are compatible.

In the current GSM standard the indicators used to control these services are stored in the user's HLR. This can result in a significant signalling penalty if the user is currently in contact with another operators' network, under a roaming arrangement, since the necessary signalling to operate the service must travel via the HLR, which may be in a different country or even a different continent. It does, however, ensure that if the user moves to an area controlled by another switching centre, the information is not lost, as the user is always associated with the same HLR. If the service is not available from the new switching centre, the indicator remains set in the HLR until the user returns to the original switching centre, or another which supports the service, or until the indicator times-out.

This arrangement is highly inefficient in signalling, as the user's current switching centre must obtain and update data from the user's HLR, which may be on the other side of the world, even though the service is being used in connection with local calls. This can add a significant overhead to the operators' costs. However, if the data were stored in the VLR, it would be lost when the "cancel location signal" was sent to the VLR on handover to another.

According to a first aspect of the invention there is provided a telecommunications system comprising a plurality of switching centres for establishing communication links with one or more network terminals, so that a network terminal can establish a communication link through different switching centres at different times; at least a first and a second of the switching centres being associated with respective register means, each register means being arranged to store data associated with the network terminals currently in communication with the respective switching centre, said data relating to the activation state of one or more functions associated with the terminals; the switching centres having means for effecting transfer of communication with a network terminal from the first switching centre to the second switching centre in response to signals;
characterised in that each register means has means for updating the data relating to the activation state of the functions associated with the terminals; and data transfer means comprising:
reading means arranged to read, from the register means associated with the first switching centre, the data relating to the current activation state of the functions associated with the terminal;
transmission means to transmit said data from the first switching centre to the second switching centre; and
storage means to store said data in a register means associated with the second switching centre.

According to a second aspect of the invention there is provided a method of operating a telecommunications system in which network terminals can establish communication links with different switching centres at different times, and in which data relating to the activation state of one or more functions associated with the network terminals is stored in a register associated with a first switching centre through which a respective terminal is currently in communication,
characterised in that the information stored in the register is subject to amendment whilst stored therein, and characterised in that when communication with the network terminal is transferred to a second switching centre, such amended data is transmitted from the register associated with the first switching centre to a register associated with the second switching centre.

This marks a departure from the present GSM procedures. In the GSM system, when a mobile switching centre (MSC) surrenders control of a mobile unit, the record of the mobile unit in the associated register (VLR) is deleted by the 'cancel location' signal transmitted from the users' HLR. However, in this invention, the information is transferred from the register associated with one switching centre to the register associated with the other switching centre. In a preferred method, the data is read from the register associated with a first switching centre; transmitted to the register associated with the second switching centre; and stored in the register associated with the second switching centre in response to signals transmitted to and from the switching centres when control of a mobile station is passed from one switching centre to another switching centre.

A problem could arise if the new switching centre is not capable of supporting the service to which the data relates. In this case the data could be lost since the new register cannot store it and it has been deleted from the original register, so that when the user returns to control by the original switching centre, or some other switching centre capable of supporting the service, the service cannot be activated. Therefore, for example, a message could remain stored in the user's VMC but no alert would be given to the user. Similarly, the CCBS service could fail.

In a preferred arrangement therefore, if communication with the network terminal is first transferred to a further switching centre not having an associated register capable of storing the data, the data is stored in a buffer register, and when communication with the network terminal is transferred to the second switching centre, the data is transmitted to the register associated with said second switching centre. It will be appreciated that in this situation, the first and second switching centres may be one and the same.

In one preferred arrangement, the data may be used to control means for release of a communications link to a network terminal at the end of a transaction wherein if a further transaction to the terminal is to be made, release of all or part of the communications link is prevented. The Applicant's co-pending application WO95/01 218 which claims the same priority as the present application, describes a system for improving the efficiency and the reliability of such services.

In a preferred embodiment the link is maintained for a predetermined delay period, which may be selectable according to the type of further transaction.

Preferably, the indicating means may be set in response to a text or voice message being stored in a message facility, or in response to an initial transaction attempt by a second terminal to which a signal is sent indicating that the first terminal has completed a transaction. The further transaction attempt to the network terminal may be a signal to the user indicating that the service has been activated ie.g. that a message is stored in a mailbox facility). It is advantageous if the link to be maintained for a predetermined delay period after the further transaction to the terminal, in order to allow the user to initiate a still further transaction from the terminal, as it is likely that the user, having been alerted to the activation of the service, will make a call attempt in order to operate it, (e.g. to access the mailbox).

Embodiments of the invention will now be described by way cf example, with reference to the drawings, in which:
- Figure 1 shows the elements of a telecommunications system incorporating the invention of our co-pending application (agents reference A24853),
- Figure 2 is a diagram showing how the system of Figure 1 functions to support a CCBS service,
- Figure 3 is a diagram showing how the system of Figure 1 functions to support an SMS service,
- Figure 4 is a diagram showing how the system of Figure 1 functions to support a VMS service, and.
- Figure 5 is a diagram illustrating the transfer of data between control centres according to the present invention.

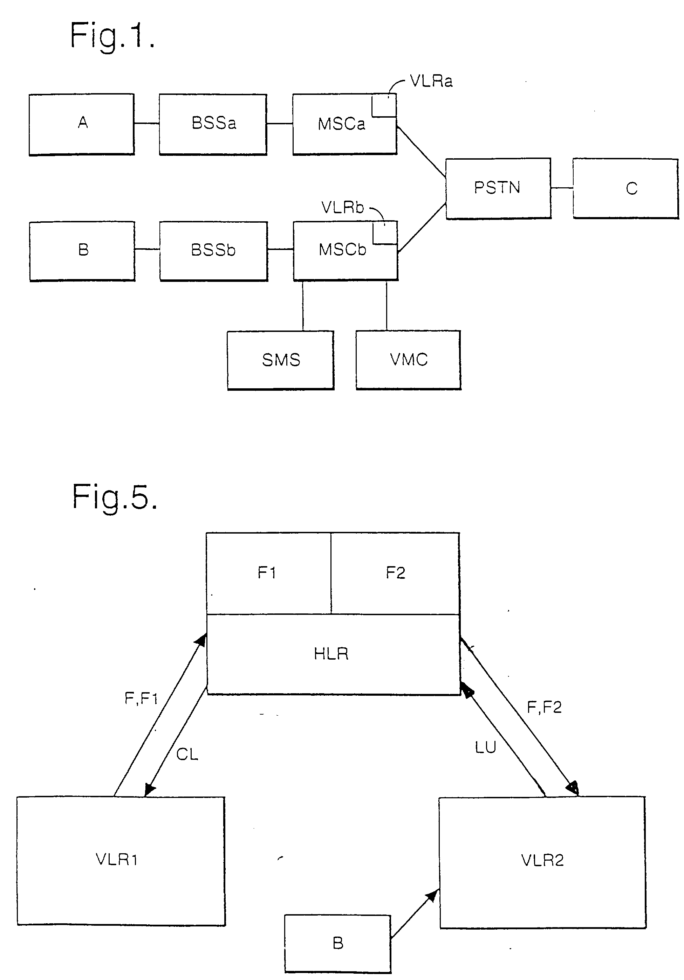

Figure 1 shows a simple cellular radio system comprising two mobile switching centres MSCa, MSCb, which are interconnected with each other and with the public switched telephone network (PSTN), and thereby with fixed users such as a terminal C. The mobile switching centres MSCa, MSCb each have associated with them a respective visitor location register VLRa, VLRb, which store data relating to those mobile units currently registered with the respective mobile switching centres MSCa, MSCb. Associated with the mobile switching centre MSCb there are also the systems necessary to store messages: a voice message centre VMC, and a short message service SMS. Similar arrangements (not shown) can be made for the other mobile switching centre MSCa. Each mobile switching centre MSCa, MSCb controls a respective base station system BSSa, BSSb. Mobile units A and B may communicate with each other through the mobile switching centres MSCa, MSCb. The mobile units A and B can move around the network, and establish communication through whichever of the base stations BSSa, BSSb, can provide the strongest radio signal for the present location of the mobile unit A, B.

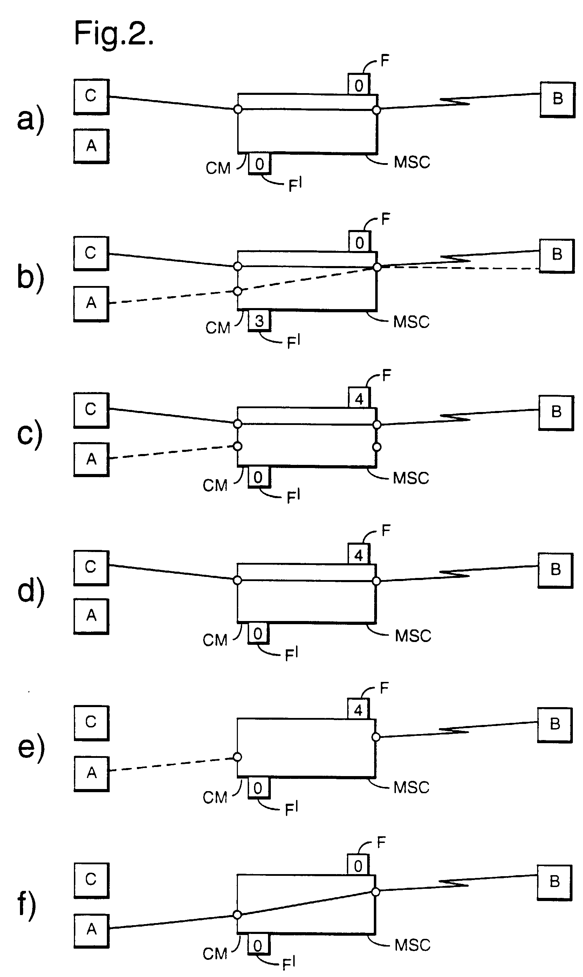

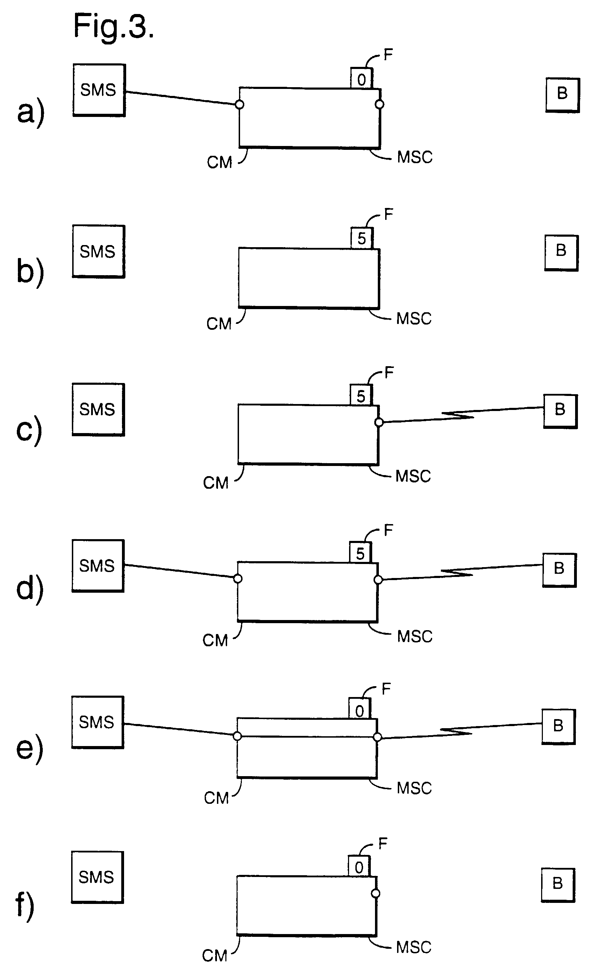

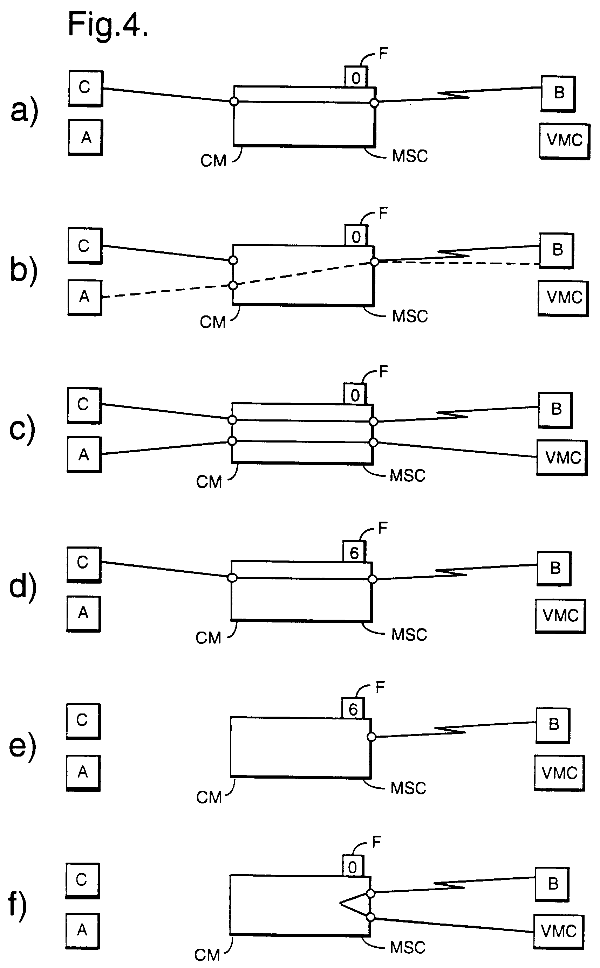

Figures 2, 3 and 4 each show six stages in the progress of the transaction management for three different services. For purposes of illustration users A,B,C are shown in these figures as working to the same mobile switching centre MSC, under the control of the same connection management system. Associated with the visitor location register VLR there are service state flag value indicators for each user; flag F relates to user B and flag F' relates to user A (not shown in figures 3 and 4) User C may also have a flag value indicator, but this plays no part in the illustrative examples and is not shown in the figures. Indeed, the user C may be a fixed terminal, connected to the MSC by way of the PSTN as shown in figure 1. The connection management system (CM) which is the central function of the mobile switching centre MSC, makes the various connections between the users A, B, C the short message service facility SMS and the voice message centre VMC. The term "connection management system" is used in this specification to describe the network entities show in Figure 1 and the communications protocols between them.

Figure 5 illustrates the transfer of these flag values from one visitor location register VLR1 to another, VLR2. The mobile user B, currently registered with a first visitor location register VLR1 associated with first mobile switching centre MSC1, is shown making contact with a second mobile switching centre MSC2. The mobile unit B has a permanent record with a home location register HLR. The mobile switching centres MSC1, MSC2 communicate with the home location register HLR to add and delete mobile units from their respective associated visitor location registers VLR1, VLR2. These embodiments utilise the concepts of protocol layers in line with the Open System Interconnection (OSI) principles to help manage complexity of large communications systems, as described in Section 58.2 of the Electronics Engineers Handbook (ed. FF Mazda, 6th Edition 1989: Butterworths Press)

Protocols are necessary for communications between the various entities defining the system. Protocols can be layered in accordance with the OSI principles, with each layer allocated particular functions, for example the Data Link layer (layer 2) provides transmission facilities making use of error detection and correction.

During a communication transaction between two network entities e.g. two terminals A, B, or a terminal and a service element e.g. a mobility management element, several protocol layers are involved. Each layer utilises services from lower layers to provide enhanced services to the layer above.

When the transactions between applications running in remote nodes finish, the communications facilities between the nodes are normally released in an orderly fashion. Each communication layer terminates its respective protocol relationship, starting with the highest protocol layer. Once all the protocol layers have cleared, communications connection is automatically released.

In the mobile environment the OSI layer 3 network layer) is conveniently subdivided into three sub-levels; the highest sublevel being connection management (CM), the middle level being mobility management (MM) and the lowest level being radio resource (RR). These provide respectively the establishment and maintenance of end-to-end connections, the handling of movement of a mobile unit between base stations (handover and location update). and the maintenance of radio communication.

The invention allows the separation of release of the signalling connections associated with the Connection Management (CM) from those controlling Mobility Management (MM) entities. In particular, the release of the CM is separated from the release of the MM and lower layer connections. The release of the MM and the corresponding lower layers is managed by a control element or flag, referred to below as the Maintain Connection Indicator (MCI) flag. After a transaction at the CM layer has ended. for example at the end of a telephone call, the lower layers are not automatically released. The status of the MCI flag is used to determine if the signalling connection towards a Mobile Station (MS) is to be kept or released immediately. Depending on the status of the MCI flag different actions are taken in the network. The flag is under the control of a supervision timer referred as the Connection Maintained Protection (CMP) timer.

This technique cf maintaining the MM connection for use by another transaction can be used to improve the quality of some services and to improve the network efficiency in supporting these services.

Maintain Connection Indicator (MCI) flags F stored in the Visitor Location Register VLR are used as a basis for decision making on whether to maintain an existing signalling connection with the mobile unit at the end of the current transaction, using the connection.

The operation of the system of Figure 1 in accordance with these protocols will now be described with reference of Figures 2, 3 and 4

The MCI variables represented by the flags F, F' can take several distinct values each indicating a different status. One of the values (zero) is used to indicate that the connection does not need to be kept and can be released immediately. The other values are used to indicate that a connection needs to be kept for use by other users. It is useful to supervise the connection to ensure that it is released (timed out) after a predetermined period if is not used. This time-out would protect against any possible abnormal events. It may be useful to have different time-out values for different applications.

The MCI status, (flags F,F') could be coded taking two possible values; one indicating that the connection is to be released immediately; and the other indicating that the connection is to kept for other transaction. For each MCI status where a connection has to be kept, a connection maintained protection (CMP) timer can be associated with it. To provide flexibilitv four different timer values including zero are assignable for each MCI state in this example. The time will depend on associated service.

Table 1 sets out a possible coding system for the MCI status and the associated CMP timer using one octet.

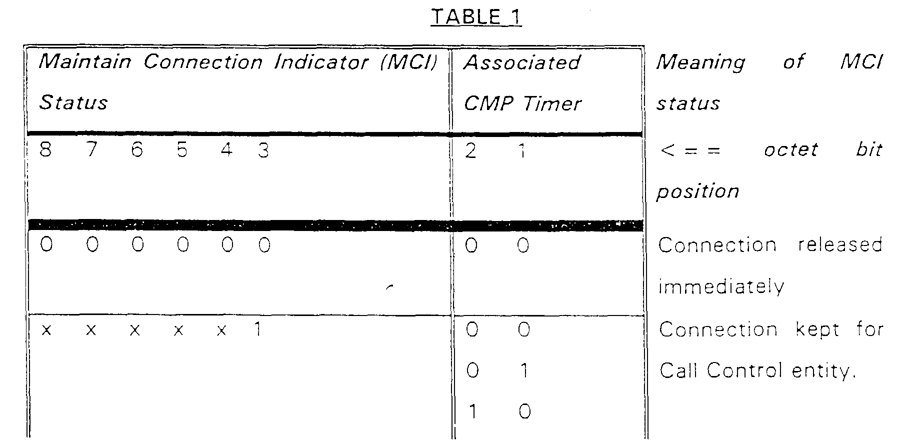

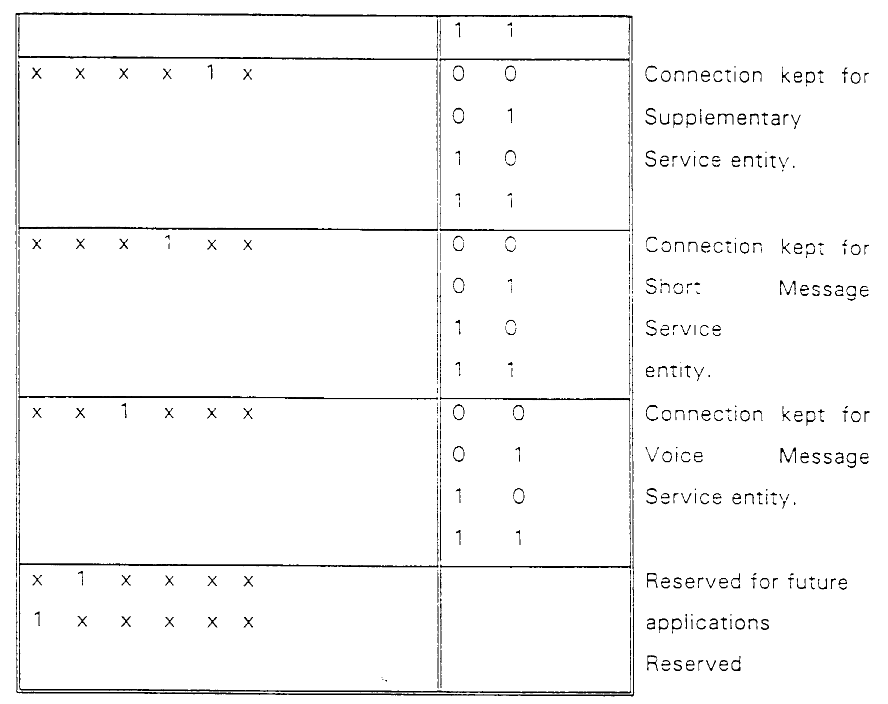

In this table "x" indicates that the status may be "0" or "1", the latter case indicating that a second entity is flagged. For example a status "1" in both position three and four (flags 3 and 4 both activated) indicates that connection is being kept for both the call control entity and the supplementary service entity. If this is the case the time-out value is the longest one corresponding to one of the flagged entities.

The connection is released if is not utilised before the timer expires.

At the end cf a transaction such as a call, or a periodic location update, the signalling connection between the mobile unit B and mobile switching centre MSC is not released immediately. The status of the MCI flags is examined and, depending on the status of the MCI flags, different actions are taken in the network. If the status of all the MCI flags is zero, indicating that no new transaction are awaiting to use the existing connection, the connection is released by sending a Clear Command Message towards the Base Station System which in turn releases the radio connection to the mobile station B. After the response from the base station system BSS is received, the connection towards the base station system BSS is released in the normal way. If the status of an MCI flag F indicates that there are other transactions which could make use of the connection, the existing signalling connection to the mobile station B is not released. The connection is maintained for use by another transaction. A connection maintained protection (CMP) may be started to supervise the maintenance of the connection until its new transaction starts utilising the maintained connection. If a new transaction is aborted without utilising the maintained signalling connection, the signalling connection is released after the expiry of the CMP timer. In the examples below, only one MCI status flag is activated for a given user at any one time.

Figure 2 shows the procedure for the Call Completion to Busy Subscriber (CCBS) service. Initiallv (step all user B is in communication with user C. In step b) user A attempts to communicate with user B as shown by the dotted line. Since user B is busy the connection management system CM offers user A the CCBS function and a flag F' is set, indicating that the connection to the user A is to be maintained for a call control function allowing the connection to be used by user A to response to the offer of the CCBS facility. As described above, the flag values depend on the nature of the service. In this case the flag '3' is set, indicating a call control function. This flag is set to expire after a predetermined time-out period. If, during the currency of the flag F', the user A responds to the invitation to use the CCBS facility the connection management system CM is configured to monitor user B, and flag F is set(step c). This time the flag value is '4', indicating that a supplementary service has been requested. An acknowledgement is sent to the user A is indicate that the service has been activated, and to clear the flag F'.

The call between the users B and C continues (step d). When it finishes (step e), the condition of flag F causes the signalling connection from the mobile switching station to user B to be kept open for a short period determined by the flag value F and its associated timer. This allows the connection management system CM to alert user A to the availability of user B so that a call back can be carried out (step f) without the need to set up a completely new connection, including the allocation of a channel, between the mobile switching centre MSC and user B. The flag F is then reset to zero.

Whilst the Mobile Station (User B) is out of radio contact with the network, information related to the CCBS service and the MCI flag value remains stored in the VLR. When the user B next makes contact with the network, whether for a call-related transaction or for a call-independent transaction such as a location update, the stored information in the VLR is used to perform different actions in the network, for example, keeping the connection for use by other transactions. As will be described below, with reference to figure 5, the information may be transferred to a different VLR if the user B next makes contact with the MSC associated with this different VLR.

Figure 3 shows the procedure for the Short Message Service. Such services are used to indicate to a user that some action is required of him, such as retrieving messages from a voice message centre which have been received whilst the user has been out of contact, for example because he was out of range of a base station or had switched his terminal off. The Short Message facility may attempt to deliver a message towards user B at any time, but the user B may not be within radio contact when a message is to be delivered (step a). The SMS facility is alerted that the message has not been delivered to user B and the service centre stores the message for future delivery. In step b) the flag is set to indicate that a message is stored in the SMS facility. In step c) user B communicates with the network, e.g. to make a registration update or to make a call attempt. The MCI flag indicates that the link so established should be maintained to allow the message to be passed to the user B (step d)) In step e) the message is transmitted to user B and the flag value F reset to zero. When the message has been transmitted the connection to user B can be dropped (step f) immediately, if it is not being used by other transactions. Alternatively, it may be maintained for a further period to allow the user B to act on the message, for example to access the voice message centre.

Figure 4 shows an alternative procedure in which the Voice Message Centre itself initiates the response. In this example the user B is initially unavailable because he is engaged on another call. Initially (step all user B is in communication with user C. In step b) user A attempts to communicate with user B as shown by the dotted line. Since user B is busy the connection management system CM diverts the call from A to a voice message centre VMC. The flag F is set to value "6". The flag indicates that a message is held in the voice message centre VMC. In step e) the call between users B and C is terminated. However, in response to the condition of flag F the signalling connection from the mobile switching station to user B is kept open for a short period determined by the flag value F. This allows the connection management system CM to make voice message connection (step f) without the need to set up a completely new connection, including the allocation of a channel, between the mobile switching centre MSC and user B.

It should be noted that in current cellular systems, if a mobile unit is handed over between two base stations controlled by different switching centres during a transaction, control of the transaction remains with the switching centre controlling the original base station, although the call is now routed from it by way of the other switching centre. When the connection is eventually released a location update is performed which results in control passing to the other switching centre. This avoids problems which might arise during a call if different switching centres operate in slightly different ways. Therefore, in the embodiments described, if an MCI flag is set requiring the connection to be maintained at the end of a transaction, any subsequent transaction using that connection will also be controlled by the first switching centre. The switching centres could belong to the same or different operators, but in practice the administrative difficulties of apportioning costs and of billing have so far precluded roaming to a different network during the course of a call.

The system for transferring flag values according to the invention of the Applicant's co-pending application referred to above will now be described with reference to Figure 5.

The user B is initially registered with the visitor location register VLR1. The user B then makes contact with the mobile switching centre MSC2 by transmitting a signal S to make a call, or for some other transaction such as a registration update (e.g. when the user first switches the unit on). Such non-call-related transactions only require the use of a signalling connection and not a full traffic-bearing link as required for a call-related transaction. This "location update" may take place at any time that a call is not in progress, for example when the user switches the mobile unit on, or initiates a call attempt, or as a result of an automatic update process carried out periodically when the unit is switched on but not in use (in "standby mode"). If the mobile unit moves to the control area of a different switching centre during the progress of a call the location upodate takes place when the connection is eventually released, as described above.

Both visitor location registers VLR1 and VLR2 need to be updated to reflect that the user B has moved to the service area of the new mobile switching centre MSC2. The signal S is detected at the mobile switching centre MSC2 which then transmits a Location Update signal LU to the Home Location Register HLR, using the Mobile Application Part (MAP) protocol of GSM. The home location register HLR transmits a Cancel Location message CL to the old mobile switching centre MSC1. Thus far the process follows standard GSM location update protocols. However, unlike the standard protocol, when the Cancel Location signal is detected at the previous mobile switching centre MSC1, call context information F for the user B is transferred to the new visitor location centre VLR2. The transfer is made through the home location register HLR of user B. The new visitor location register VLR2 processes the call context information including the flag information F in the same way as the first visitor location register VLR1. Thus the user B will receive the same benefits at the new mobile switching centre MSC2.

In the event that the new mobile switching centre MSC2 is unable to support one or more of the services, the data for such services, (F1) is stored in a buffer register in the home location register (HLR) until the user next makes contact with the first mobile switching centre MSC1 or some other mobile switching centre capable of supporting the service. Similarly, if such data F2 is already held in the buffer register as a result of a previous transfer and the new mobile switching centre MSC2 is capable of supporting the service to which the data F2 relates (the current MSC mobile switching centre MSC1 being incapable of doing so), such data F2 is forwarded from the buffer register to the new mobile switching centre MSC2 for storing in its visitor location register VLR2.

The embodiments described above are described in relation to a cellular radio system. However, similar principles are applicable to any communications system in which a user can appear at various points in the system. For example, a user identification device such as a magnetic card, for use with a fixed terminal, may be used to identify the user, and his current location, to the network.

## Claims

1. Telecommunications system comprising a plurality of switching centres for establishing communication links with one or more network terminals (B), so that a network terminal can establish a communication link through different switching centres at different times; at least a first and a second of the switching centres (MSCa, MSCb) being associated with respective register means (VLRa, VLRb), each register means being arranged to store data associated with the network terminals (B) currently in communication with the respective switching centre, said data relating to the activation state of one or more functions associated with the terminals; the switching centres having means for effecting transfer of communication with a network terminal from the first switching centre (MSCa) to the second switching centre (MSCb) in response to signals (S, CL); characterised in that each register means (VLRa, VLRb) has means for updating the data relating to the activation state of the functions associated with the terminals; and data transfer means comprising: reading means arranged to read, from the register means (VLRa) associated with the first switching centre (MSCa), the data relating to the current activation state of the functions associated with the terminal; transmission means to transmit said data from the first switching centre (MSCa) to the second switching centre (MSCb); and storage means to store said data in the register means (VLRb) associated with the second switching centre (MSCb).

2. Telecommunications system according to claim 1, wherein the data transfer means includes a buffer register (HLR) for storing data from the register (VLRa) of the first switching centre (MSCa) when control of a base station with which the data is associated passes from the control of the first switching centre; the system including means for detecting when communication with the network terminal (B) is transferred from a further switching centre not having a register capable of storing the data to a switching centre MSCb having such a register VLRb; and
means for transmitting the data stored in the buffer register (HLR) to the register (VLRb) of the second switching centre (MSCb) when communication with the network terminal (B) is transferred from such a further switching centre to such a second switching centre (MSCb).

3. A telecommunications system as claimed in claim 1 or claim 2, further comprising means for releasing a communications link upon termination of a transaction from or to a terminal (B), the registers (VLRa, VLRb) including indicating means (F) settable to indicate whether a further transaction is to be made involving the terminal (B), and means responsive to the setting of the indicating means for preventing release of all or part of the communications link.

4. A telecommunications system according to Claim 3, comprising timer means for causing the communications link to be released after a predetermined delay period.

5. A telecommunications system according to Claim 4, wherein the settable indicating means (F) indicates the type of further transaction to be made, and the delay period of the timer means is selectable according to the type of transaction indicated.

6. A telecommunications system according to claim 4 or claim 5, comprising means for maintaining a communications link for a further predetermined delay period after termination of such further transaction to the terminal, in order to allow a further transaction to be initiated from the terminal.

7. A telecommunications system according to claim 3, 4, 5, or 6, having a message facility (VMC) for storing messages to a first caller when a connection to the first caller cannot be established, wherein the indicating means (F) is settable in response to a message being stored in the message facility (VMC).

8. A telecommunications system according to claim 7 wherein the message facility (VMC) includes means for storing voice messages.

9. A telecommunications system according to claim 7 or 8 wherein the message facility (VMC) includes means for storing text messages.

10. A telecommunications system according to any of claims 3 to 9, having settable signalling means (F') for signalling to a second network terminal (A) that a first network terminal (B) has completed a transaction, the signalling means (F') being settable in response to a transaction attempt by said second terminal (A) to said first network terminal (B).

11. A telecommunications system according to any preceding claim, wherein the telecommunications system is a cellular radio system.

12. A method of operating a telecommunications system in which network terminals can establish communication links with different switching centres at different times, and in which data relating to the activation state of one or more functions associated with the network terminals is stored in a register (VLRa) associated with a first switching centre (MSCa) through which a respective terminal (B) is currently in communication, characterised in that the information stored in the register VLRa is subject to amendment whilst stored therein, and characterised in that when communication with the network terminal (B) is transferred to a second switching centre (MSCb), such amended data is transmitted from the register (VLRa) associated with the first switching centre (MSCa) to a register (VLRb) associated with the second switching centre (MSCb).

13. A method according to claim 12, in which the data is read from the register (VLRa) associated with a first switching centre (MSCa); transmitted to the register (VLRb) associated with the second switching centre (MSCb); and stored in the register (VLRb) associated with the second switching centre (MSCb) in response to signals (S, CL) transmitted to and from the switching centres (MSCa, MSCb) when control of a mobile station (B) is passed from one switching centre (MSCa) to another switching centre (MSCb).

14. A method according to claim 12 or 13, wherein if communication with the network terminal is first transferred to a further switching centre not having an associated register capable of storing the data, the data is stored in a buffer register, and when communication with the network terminal is transferred to the second switching centre, the data is transmitted to the register associated with said second switching centre.

15. A method according to claim 12, 13 or 14, in which the data is used to control means for release of a communications link to a network terminal at the end of a transaction wherein if a further transaction to the terminal is to be made, release of all or part of the communications link is prevented.

16. A method according to Claim 15, wherein the link is maintained for a predetermined delay period.

17. A method according to Claim 16, wherein the delay period is selected according to the type of further transaction to be made.

18. A method according to claim 16, 17 or 18 wherein the link is maintained for a further predetermined delay period after the further transaction to the terminal, in order to allow a further transaction to be initiated from the terminal.

19. A method according to any of Claims 15 to 18, wherein the communication link is maintained if a message to the first network terminal is stored in a message facility.

20. A method according to any of Claims 15 to 19, wherein the indicating means is set in response to a transaction attempt from a second terminal.

21. A method according to Claim 20, wherein a signal is sent to the second terminal when the first transaction ends.

22. A method according to any of claims 12 to 21, wherein the telecommunications system is a cellular radio system.

## Patentansprüche

1. Telekommunikationssystem mit mehreren Schaltzentralen zur Erstellung von Kommunikationsverbindungen, mit einem oder mehreren Netzwerkanschlüssen (B), so daß ein Netzwerkanschluß zu verschiedenen Zeitpunkten über verschiedene Schaltzentralen eine Kommunikationsverbindung erstellen kann und wenigstens einer ersten und einer zweiten Schaltzentrale (MSCa, MSCb), die jeweils entsprechenden Registereinrichtungen (VLRa, VLRb) zugeordnet sind, wobei jede Registereinrichtung Daten speichern kann, die den Netzwerkanschlüssen (B) zugeordnet sind, die gerade mit der entsprechenden Schaltzentrale in Kommunikation stehen, und wobei die Daten den Aktivierungszustand einer oder mehrerer den Anschlüssen zugeordneter Funktionen betreffen, wobei die Schaltzentralen Mittel zum Durchführen einer Kommunikationsübertragung mit einem Netzwerkanschluß von der ersten Schaltzentrale (MSCa) an die zweite Schaltzentrale (MSCb) in Reaktion auf Signale (S, CL) aufweist,
dadurch gekennzeichnet, daß
jede Registereinrichtung (VLRa, VLRb) Mittel zur Aktualisierung der Daten aufweist, die den Aktivierungszustand der mit dem Anschluß verbundenen Funktionen betreffen, und
eine Datenübertragungseinrichtung enthält:
eine Leseeinrichtung zum Lesen von Daten von der der ersten Schaltzentrale (MSCa) zugeordneten Registereinrichtung (VLRa) betreffend den aktuellen Aktivierungszustand der dem Anschluß zugeordneten Funktionen,
eine Übermittlungseinrichtung zur Übermittlung der Daten von der ersten Schaltzentrale (MSCa) an die zweite Schaltzentrale (MSCb) und
eine Speichereinrichtung, die die Daten in der der zweiten Schaltzentrale (MSCb) zugeordneten Registereinrichtung (VLRb) speichert.

2. Telekommunikationssystem nach Anspruch 1, wobei die Datenübertragungseinrichtung ein Pufferregister (HLR) zur Speicherung der Daten des Registers (VLRa) der ersten Schaltzentrale (MSCa) aufweist, wenn die Steuerung einer Basisstation, der die Daten zugeordnet sind, auf die Steuerung der ersten Schaltzentrale übergeht, wobei das System eine Einrichtung aufweist, die detektiert, ob ein Gespräch mit dem Netzwerkanschluß (B) von einer weiteren Schaltzentrale, die kein Register zur Speicherung der Daten aufweist, an eine Schaltzentrale MSCb übertragen wird, die ein solches Register VLRb aufweist; und
Mittel zur Übertragung der in dem Pufferregister (HLR) gespeicherten Daten an das Register (VLRb) der zweiten Schaltzentrale (MSCb) aufweist, wenn eine Kommunikation mit dem Netzwerkanschluß (B) von der weiteren Schaltzentrale an eine zweite Schaltzentrale (MSCb) übertragen wird.

3. Telekommunikationssystem nach Anspruch 1 oder 2, das weiterhin eine Einrichtung zur Auflösung einer Kommunikationsverbindung am Ende einer Übertragung von einem oder zu einem Anschluß (B) aufweist, wobei die Register (VLRa, VLRb) eine setzbare Markierung (F) aufweisen, die anzeigt, ob eine weitere Übertragung erfolgt, von der der Anschluß (B) betroffen ist, und eine Einrichtung aufweist, die auf das Setzen der Markierung reagiert, um die Auflösung aller oder eines Teils der Kommunikationsverbindungen zu verhindern.

4. Telekommunikationssystem nach Anspruch 3 mit einer Zeitgebereinrichtung, die die Auflösung der Kommunikationsverbindung nach einer vorbestimmten Verzögerungszeit bewirkt.

5. Telekommunikationssystem nach Anspruch 4, wobei die setzbare Markierung (F) die Art der weiteren durchzuführenden Übertragung anzeigt, wobei die Verzögerungszeit der Zeitgebereinrichtung gemäß der Art der angezeigten Übertragung wählbar ist.

6. Telekommunikationssystem nach Anspruch 4 oder 5 mit einer Einrichtung für den Erhalt einer Kommunikationsverbindung für eine weitere vorbestimmte Verzögerungszeit nach Ende der weiteren Übertragungen zu diesem Anschluß, damit von dem Anschluß weitere Übertragungen möglich sind.

7. Telekommunikationssystem nach Anspruch 3, 4, 5 oder 6 mit einer Nachrichteneinrichtung (VMC) zur Speicherung von Nachrichten an einen ersten Anrufer, wenn eine Verbindung zum ersten Anrufer nicht hergestellt werden kann, wobei die Markierung (F) abhängig davon gesetzt wird, ob eine Nachricht auf der Nachrichteneinrichtung (VMC) gespeichert wurde.

8. Telekommunikationssystem nach Anspruch 7, wobei die Nachrichteneinrichtung (VMC) eine Einrichtung zur Speicherung von Sprachnachrichten aufweist.

9. Telekommunikationssystem nach Anspruch 7 oder 8, wobei die Nachrichteneinrichtung (VMC) eine Einrichtung zur Speicherung von Textnachrichten aufweist.

10. Telekommunikationssystem nach einem der Ansprüche 3 bis 9, mit einer setzbaren Signalmarkierung (F') zur Signalisierung an einen zweiten Netzwerkanschluß (A), daß ein erster Netzwerkanschluß (B) eine Übertragung beendet hat, wobei die Signalmarkierung (F') in Abhängigkeit davon setzbar ist, ob ein Übertragungsversuch durch den zweiten Anschluß (A) an den ersten Netzwerkanschluß (B) erfolgte.

11. Telekommunikationssystem nach zumindest einem vorangehenden Ansprüche, wobei das Telekommunikationssystem ein zelluläres Funksystem ist.

12. Verfahren für den Betrieb eines Telekommunikationssystems, in welchem Netzwerkanschlüsse zu verschiedenen Zeitpunkten über verschiedene Schaltzentralen Kommunikationsverbindungen erstellen können, und in welchem Daten betreffend den Aktivierungszustand einer oder mehrerer den Netzwerkanschlüssen zugeordneten Funktionen in einem Register (VLRa) gespeichert werden, das einer ersten Schaltzentrale (MSCa) zugeordnet ist, mit dem ein entsprechender Anschluß (B) gerade in Kommunikation steht,
dadurch gekennzeichnet, daß
die Information, die in dem Register VLRa gespeichert ist, geändert wird, während sie in dem Register gespeichert wird, und die geänderten Daten von dem der ersten Schaltzentrale (MSCa) zugeordnete Register (VLRa) an ein der zweiten Schaltzentrale (MSCb) zugeordnetes Register (VLRb) übertragen werden, wenn eine Kommunikation mit dem Netzwerkanschluß (B) an eine zweiten Schaltzentrale (MSCb) übertragen wird.

13. Verfahren nach Anspruch 12, in welchem die Daten von dem der ersten Schaltzentrale (MSCa) zugeordneten Register (VLRa) gelesen werden, an das der zweiten Schaltzentrale (MSCb) zugeordnete Register (VLRb) übertragen werden und in dem mit der zweiten Schaltzentrale (MSCb) zugeordnete Register (VLRb) in Reaktion auf Signale (S, CL) gespeichert werden, die an die und von den Schaltzentralen (MSCa, MSCb) übertragen werden, wenn die Steuerung einer Mobilstation (B) von einer Schaltzentrale (MSCa) auf eine andere Schaltzentrale (MSCb) übergeht.

14. Verfahren nach Anspruch 12 oder 13, bei dem die Daten in einem Pufferregister gespeichert werden, wenn eine Kommunikation mit dem Netzwerkanschluß zuerst an eine weitere Schaltzentrale übertragen wird, die kein angeschlossenes Register zur Speicherung der Daten aufweist, und die Daten an das der zweiten Schaltzentrale zugeordnete Register übertragen werden, wenn die Kommunikation mit dem Netzwerkanschluß an die zweite Schaltzentrale übertragen wird.

15. Verfahren nach Anspruch 12, 13 oder 14, in welchem die Daten zum Steuern einer Einrichtung zum Auflösen einer Kommunikationsverbindung mit einem Netzanschluß am Ende einer Übertragung verwendet werden, wobei das Auflösen der gesamten oder eines Teils der Kommunikationsverbindung verhindert wird, wenn eine weitere Übertragung zu dem Anschluß erfolgen soll.

16. Verfahren nach Anspruch 15, wobei die Verbindung eine vorbestimmte Verzögerungszeit erhalten wird.

17. Verfahren nach Anspruch 16, wobei die Verzögerungszeit gemäß der Art der weiteren Übertragung, die folgen soll, gewählt wird.

18. Verfahren nach Anspruch 16, 17, wobei die Verbindung eine weitere vorbestimmte Verzögerungszeit nach der weiteren Übertragung an den Anschluß erhalten wird, um eine weitere von dem Anschluß ausgehende Übertragung zu ermöglichen.

19. Verfahren nach einem der Ansprüche 15 bis 18, wobei die Kommunikationsverbindung erhalten bleibt, wenn eine Nachricht an den ersten Netzwerkanschluß in einer Nachrichteneinrichtung gespeichert ist.

20. Verfahren nach einem der Ansprüche 15 bis 19, wobei die Markierung in Abhängigkeit von einem Übertragungsversuch von einem zweiten Anschluß gesetzt wird.

21. Verfahren nach Anspruch 20, wobei ein Signal an den zweiten Anschluß gesendet wird, wenn die erste Übertragung beendet ist.

22. Verfahren nach einem der Ansprüche 12 bis 21, wobei das Telekommunikationssystem ein zelluläres Funksystem ist.

## Revendications

1. Système de télécommunications comprenant une pluralité de centres de commutation pour établir des liaisons de communication avec un ou plusieurs terminaux (B) d'un réseau, de manière à ce qu'un terminal du réseau puisse établir une liaison de communication par l'intermédiaire de différents centres de commutation à des moments différents ; au moins un premier et un deuxième des centres de commutation (MSCa, MSCb) étant associés à des moyens de registre respectifs (VLRa, VLRb), chaque moyen de registre étant prévu pour stocker des données associées aux terminaux de réseau (B) actuellement en communication avec le centre de commutation respectif, lesdites données concernant l'état d'activation d'une ou plusieurs fonctions associées aux terminaux ; les centres de commutation ayant des moyens pour réaliser le transfert de communication avec un terminal de réseau du premier centre de commutation (MSCa) au deuxième centre de commutation (MSCb) en réponse à des signaux (S, CL) ;
caractérisé en ce que chaque moyen de registre (VLRa, VLRb) comprend des moyens pour mettre à jour les données concernant l'état d'activation des fonctions associées aux terminaux ; et des moyens de transfert de données comprenant : des moyens de lecture prévus pour lire, dans les moyens de registre (VLRa) associés au premier centre de commutation (MSCa), les données concernant l'état d'activation actuel des fonctions associées au terminal ; des moyens de transmission pour transmettre lesdites données du premier centre de commutation (MSCa) au deuxième centre de commutation (MSCb) ; et des moyens de stockage pour stocker lesdites données dans des moyens de registre (VLRb) associés au deuxième centre de commutation (MSCb).

2. Système de télécommunications selon la revendication 1, dans lequel les moyens de transfert de données comprennent un registre tampon (HLR) pour stocker les données provenant du registre (VLRa) du premier centre de commutation (MSCa) lorsque le contrôle d'une station de base à laquelle les données sont associées échappe au contrôle du premier centre de commutation ; le système comprenant des moyens pour détecter lorsque la communication avec le terminal du réseau (B) est transférée d'un autre centre de commutation d'ayant pas de registre capable de stocker les données à un centre de commutation (MSCb) ayant un tel registre (VLRb) ; et
des moyens pour transmettre les données stockées dans le registre tampon (HLR) au registre (VLRb) du deuxième centre de commutation (MSCb) lorsque la communication avec le terminal du réseau (B) est transférée d'un tel autre centre de commutation à un tel deuxième centre de commutation (MSCb).

3. Système de télécommunications selon la revendication 1 ou la revendication 2, comprenant en outre des moyens pour libérer une liaison de communication lorsque se termine une transaction depuis ou vers un terminal (B), les registres (VLRa, VLRb) comprenant des moyens d'indication (F) pouvant être réglés pour indiquer si une autre transaction doit être faite impliquant le terminal (B), et des moyens réagissant au réglage des moyens d'indication destinés à empêcher la libération de toute ou une partie de la liaison de communication.

4. Système de télécommunications selon la revendication 3, comprenant des moyens de minuteur pour provoquer la libération de la liaison de communication après écoulement d'un laps de temps prédéterminé.

5. Système de télécommunications selon la revendication 4, dans lequel les moyens d'indication réglables (F) indiquent le type de transaction supplémentaire à établir, et le laps de temps des moyens de minuteur peut être sélectionné en fonction du type de transaction indiqué.

6. Système de télécommunications selon la revendication 4 ou la revendication 5, comprenant des moyens pour maintenir une liaison de communication pendant un laps de temps prédéterminé supplémentaire à la fin d'une telle transaction supplémentaire avec le terminal, afin de permettre le lancement d'une autre transaction depuis le terminal.

7. Système de télécommunications selon la revendication 3, 4, 5 ou 6, ayant un service de messagerie (VMC) pour stocker des messages destinés à une première personne appelant lorsqu'une connexion avec le premier appelant ne peut pas être établie, dans lequel les moyens d'indication (F) peuvent être réglés en réponse à un message stocké dans le service de messagerie (VMC).

8. Système de télécommunications selon la revendication 7, dans lequel le service de messagerie (VMC) comprend des moyens pour stocker des messages vocaux.

9. Système de télécommunications selon la revendication 7 ou 8, dans lequel le service de messagerie (VMC) comprend des moyens pour stocker des messages de texte.

10. Système de télécommunications selon l'une quelconque des revendications 3 à 9, ayant des moyens de signalisation réglables (F') pour signaler à un deuxième terminal du réseau (A) qu'un premier terminal du réseau (B) a terminé une transaction, les moyens de signalisation (F') pouvant être réglés en réponse à une tentative de transaction par ledit deuxième terminal (A) avec ledit premier terminal de réseau (B).

11. Système de télécommunications selon l'une quelconque des revendications précédentes, dans lequel le système de télécommunications est un système radiocellulaire.

12. Procédé pour opérer un système de télécommunications dans lequel des terminaux de réseau peuvent établir des liaisons de communication avec des centres de commutation différents à des moments différents, et dans lequel des données concernant l'état d'activation d'une ou plusieurs fonctions associées aux terminaux de réseau sont stockées dans un registre (VRLa) associé à un premier centre de commutation (MSCa) par l'intermédiaire duquel un terminal respectif (B) est actuellement en communication, caractérisé en ce que les informations stockées dans le registre VRLa sont susceptibles d'être modifiées pendant qu'elles sont stockées dans celui-ci, et caractérisé en ce que lorsque la communication avec le terminal de réseau (B) est transférée à un deuxième centre de commutation (MSCb), ces données modifiées sont transmises du registre (VRLa) associé au premier centre de commutation (MSCa) à un registre (VRLb) associé au deuxième centre de commutation (MSCb).

13. Procédé selon la revendication 12, dans lequel les données sont lues dans le registre (VRLa) associé à un premier centre de commutation (MSCa) ; transmises au registre (VRLb) associé au deuxième centre de commutation (MSCb) ; et stockées dans le registre (VRLb) associé au deuxième centre de commutation (MSCb) en réponse à des signaux (S, CL) transmis vers et depuis les centres de commutation (MSCa, MSCb) lorsque le contrôle d'un poste mobile (B) passe d'un centre de commutation (MSCa) à un autre centre de commutation (MSCb).

14. Procédé selon la revendication 12 ou 13, dans lequel si la communication avec le terminal du réseau est tout d'abord transférée à un autre centre de commutation n'ayant pas un registre associé capable de stocker les données, les données sont stockées dans un registre tampon, et lorsque la communication avec le terminal du réseau est transférée au deuxième centre de commutation, les données sont transmises au registre associé audit deuxième centre de commutation.

15. Procédé selon la revendication 12, 13 ou 14, dans lequel les données sont utilisées pour commander des moyens pour libérer une liaison de communication avec un terminal de réseau à la fin d'une transaction, dans lequel si une autre transaction vers le terminal doit être établie, la libération de toute ou une partie de la liaison de communication est empêchée.

16. Procédé selon la revendication 15, dans lequel la liaison est maintenue pendant un laps de temps prédéterminé.

17. Procédé selon la revendication 16, dans lequel le laps de temps prédéterminé est sélectionné en fonction du type de transaction supplémentaire à établir.

18. Procédé selon la revendication 16, 17 ou 18, dans lequel la liaison est maintenue pendant un laps de temps prédéterminé après la transaction supplémentaire au terminal, afin de permettre l'établissement d'une autre transaction depuis le terminal.

19. Procédé selon l'une quelconque des revendications 15 à 18, dans lequel la liaison de communication est maintenue si un message au premier terminal de réseau est stocké dans un service de messagerie.

20. Procédé selon l'une quelconque des revendications 15 à 19, dans lequel les moyens d'indication sont réglés en réponse à une tentative de transaction par un deuxième terminal.

21. Procédé selon la revendication 20, dans lequel un signal est envoyé au deuxième terminal lorsque la première transaction se termine.

22. Procédé selon l'une quelconque des revendications 12 à 21, dans lequel le système de télécommunications est un système radiocellulaire.
